# EUROPÄISCHE PATENTSCHRIFT

(11) **EP 1 901 839 B1**
(45) Veröffentlichungstag und Bekanntmachung des Hinweises auf die Patenterteilung: **16.03.2011**
(21) Anmeldenummer: 06777543.7
(22) Anmeldetag: 03.07.2006
(51) Int. Cl.: B01J 19/20, B01J 8/00

(54) **VERWENDUNG EINER VORRICHTUNG ZUR ZUGABE MINDESTENS EINES ZUSATZSTOFFES IN EINEN REAKTORINNENRAUM**
USE OF A DEVICE FOR ADDITION OF AT LEAST ONE ADDITIVE INTO A REACTOR
UTILISATION D'UN DISPOSITIF POUR AJOUTER AU MOINS UN ADDITIF DANS UN COMPARTIMENT INTERIEUR D'UN REACTEUR

(30) Priorität: 04.07.2005 DE 102005031114
(43) Veröffentlichungstag der Anmeldung: 26.03.2008
(73) Patentinhaber: BASF SE, 67056 Ludwigshafen (DE)
(72) Erfinder: HILLEBRECHT, Annemarie, 68163 Mannheim (DE); STUEVEN, Uwe, 65812 Bad Soden (DE); VAN MIERT, Leo, B-2040 Antwerpen (BE); VAN ESBROECK, Dominicus, B-2040 Antwerpen (BE); BRIAN, Bernd, 67246 Dirmstein (DE); CHSZANIECKI, Siegfried, 30171 Hannover (DE)
(86) Internationale Anmeldenummer: PCT/EP2006/063787
(87) Internationale Veröffentlichungsnummer: WO 2007/003619

(56) Entgegenhaltungen:
- WO-A-01/38402
- US-A- 3 452 865
- US-A- 4 250 292
- US-A- 5 644 007

## Beschreibung

Die Erfindung betrifft eine Verwendung einer Vorrichtung zur Zugabe mindestens eines festen, viskos-flüssigen oder in Lösemittel dispergierten Zusatzstoffes in einen Reaktorinnenraum eines Reaktors zur Herstellung von vernetzten, feinteiligen Polymerisaten.

Vernetzte feinteilige Polymerisate werden im Allgemeinen in Knetreaktoren hergestellt. Ein solcher Knetreaktor mit mindestens zwei achsparallelen rotierenden Wellen, auf deren Oberflächen Scheibenflächen mit an ihrem Umfang angeordneten Knetbarren vorgesehen sind, ist z.B. aus EP-A 0 517 068 bekannt. Die Knetbarren sind so angeordnet, dass diejenigen auf der einen Welle in die auf der anderen Welle eingreifen. Abhängig von der Drehzahl der Wellen, welche unterschiedlich sein kann, kann die Anzahl der Knetbarren auf den Wellen variieren. So sind z.B. bei einem Drehzahlverhältnis von 1 : 4 z.B. 8 Knetbarren über den Umfang auf der Hauptwelle angeordnet und 2 Knetbarren auf der als Putzwelle bezeichneten zweiten Welle, die sich viermal so schnell dreht wie die Hauptwelle. Bei dem aus EP-A 0 517 068 bekannten Mischkneter werden alle für die Herstellung des Polymerisates benötigten Edukte über einen Aufgabestutzen zugegeben.

WO-A 2004/022608 offenbart den Einsatz eines Knetreaktors mit zwei drehbar gelagerten Wellen, auf deren Oberflächen Knetbarren angeordnet sind, zur Herstellung von Superabsorbern. Superabsorber sind dabei gelförmige Polymerisate. Die Polymerisierung wird entweder in einer homogenen wässrigen Monomerlösung oder in einer heterogenen Bassinölmischung durchgeführt. Durch den Einsatz des Knetreaktors als Polymerisations-Reaktor werden kleine Gelpartikel hergestellt.

WO-A 01/38402 offenbart ebenfalls ein Verfahren zur kontinuierlichen Herstellung von vernetzten feinteiligen gelförmigen Polymerisaten. Die Reaktion wird dabei in einem Knetreaktor mit mindestens zwei achsparallel rotierenden Wellen durchgeführt, wobei sich auf den Wellen mehrere Knet- und Transportelemente befinden, die eine Förderung der am Anfang des Knetreaktors zugegebenen Stoffe in axiale Richtung zum Ende des Mischers bewirken.

Bei keinem der aus dem Stand der Technik bekannten Knetreaktoren ist es möglich, weitere Komponenten im Verlauf der Reaktion an einer anderen Position am Knetreaktor zuzuführen.

Aufgabe der Erfindung ist es, Zusatzstoffe an beliebiger Position so in den Reaktor zuzugeben, dass diese in beliebigen Mengen ohne Verstopfung zudosiert werden können und dass sich an den Aufgabestellen keine Anbackungen oder Verklumpungen bilden.

Gelöst wird die Aufgabe durch Verwendung einer Vorrichtung zur Zugabe mindestens eines festen, viskos-flüssigen oder in Lösemittel dispergierten Zusatzstoffes in einen Reaktorinnenraum eines Reaktors zur Herstellung von vernetzten, feinteiligen Polymerisaten durch Copolymerisieren von
(a) wasserlöslichen, monoethylenisch ungesättigten Monomeren und
(b) 0,001 bis 5 Mol%, bezogen auf die Monomere (a), mindestens zwei polymerisierbare Gruppen enthaltenden Monomeren,
(c) 0 bis 20 Mol% bezogen auf die Monomere (a) wasserunlöslichen monoethylenisch ungesättigten Monomeren,
wobei die Vorrichtung mindestens eine Schnecke zur Förderung des mindestens einen Zusatzstoffes umfasst und die mindestens eine Schnecke in einer Zugabeöffnung im Wesentlichen bündig mit der Innenwand des Reaktorinnenraumes endet.

Wasserlösliche monoethylenisch ungesättigte Monomere der Gruppe (a) sind beispielsweise ethylenisch ungesättigte C₃-bis C₆-Carbonsäuren, deren Amide und Ester mit Aminoalkoholen der Formel 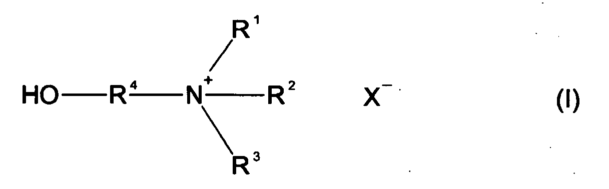 in der R⁴ C₂ bis C₅-Alkylen und R¹, R², R³ unabhängig voneinander Wasserstoff, Methyl, Ethyl oder Propyl bedeuten. Bei diesen Verbindungen handelt es sich beispielsweise um Acrylsäure, Methacrylsäure, Crotonsäure, Itaconsäure, Maleinsäure, Fumarsäure sowie den Alkali- oder Ammoniumsalzen dieser Säuren, Acrylamid, Methacrylamid, Crotonsäureamid, Dimethylaminoethylacrylat, Diethylaminoethylacrylat, Dimethylaminopropylacrylat, Dimethylaminobutylacrylat, Diethylaminoethylmethacrylat, Dimethylaminoethylmethacrylat, Dimethylaminopropylmethacrylat, Dimethylaminoneopentylacrylat und Dimethylaminoneopentylmethacrylat. Die basischen Acrylate und Methacrylate werden in Form der Salze mit starken Mineralsäuren, Sulfonsäuren oder Carbonsäuren oder in quaternisierter Form eingesetzt. Das Anion X⁻ für die Verbindungen der Formel I ist der Säurerest der Mineralsäuren bzw. der Carbonsäuren oder Methosulfat, Ethosulfat oder Halogenid aus einem Quaternierungsmittel.

Weitere wasserlösliche Monomere der Gruppe (a) sind N-Vinylpyrrolidon, Acrylamidopropansulfonsäure, Vinylphosphonsäure und/oder Alkali- bzw. Ammoniumsalze der Vinylsulfonsäure. Die anderen Säuren können ebenfalls entweder in nicht neutralisierter Form oder in partiell bzw. bis zu 100 % neutralisierter Form bei der Polymerisation eingesetzt werden. Als wasserlösliche Monomere der Gruppe (a) eignen sich auch Diallylammoniumverbindungen, wie Dimethyldiallylammoniumchlorid, Diethyldiallylammoniumchlorid oder Diallylpiperidiniumbromid, N-Vinylimidazoliumverbindungen, wie Salze oder Quaternisierungsprodukte von N-Vinylimidazol und 1-Vinyl-2-methylimidazol, und N-Vinylimidazoline, wie N-Vinylimidazolin, 1-Vinyl-2-methylimidazolin, 1-Vinyl-2-ethylimidazolin oder 1-Vinyl-2-n-propylimidazolin, die ebenfalls in quaternisierter Form oder als Salz bei der Polymerisation eingesetzt werden.

Bevorzugte Monomere der Gruppe (a) sind Acrylsäure, Methacrylsäure sowie die Alkali- oder Ammoniumsalze dieser Säuren, Acrylamid und/oder Methacrylamid. Diese Monomere können in jedem beliebigen Verhältnis miteinander copolymerisiert werden.

Die Polymerisation der Monomere der Gruppe (a) erfolgt in Gegenwart von Vernetzern (Monomere der Gruppe (b)). Die Vernetzer enthalten mindestens zwei ethylenisch ungesättigte Doppelbindungen.

Geeignete Vernetzer sind beispielsweise N,N'-Methylenbisacrylamid, Polyethylenglykoldiacrylate und Polyethylenglykoldimethacrylate, die sich jeweils von Polyethylenglykolen eines Molekulargewichts von 126 bis 8500, vorzugsweise 400 bis 2000, ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether von Polyethylenglykolen eines Molekulargewichts von 126 bis 4000, Trimethylolpropandiallylether, Butandioldivinylether, Pentaerythrittriallylether und/oder Divinylethylenharnstoff. Vorzugsweise setzt man wasserlösliche Vernetzer ein, z.B. N,N-Methylenbisacrylamid, Polyethylenglykoldiacrylat, Polyethylenglykoldimethacrylate, Pentaerythrittriallylether und/oder Divinylharnstoff. Die Monomere der Gruppe (b) werden in Mengen von 0,001 bis 5, vorzugsweise 0,005 bis 0,5 Mol% bezogen auf die Monomere (a) bei der Copolymerisation eingesetzt.

Die Copolymerisation der Monomere der Gruppen (a) und (b) kann - sofern eine Änderung der Eigenschaften der Copolymerisate gewünscht wird - zusätzlich noch in Gegenwart von Monomeren der Gruppe (c) durchgeführt werden. Als Monomere der Gruppe (c) kommen beispielsweise Hydroxyethylacrylat, Hydroxypropylacrylat, Hydroxyethylmethacrylat, Hydroxypropylmethacrylat, Acrylnitril und/oder Methacrylnitril in Betracht. Außerdem eignen sich Ester der Acrylsäure oder Methacrylsäure mit 1 bis 18 Kohlenstoffatome enthaltenden einwertigen Alkoholen, z. B. Ethylacrylat, Ethylacrylat, Propylacrylat, Isopropylacrylat, n-Butylacrylat, Isobutylacrylat, Hexylacrylat, 2-Ethylhexylacrylat, Stearylacrylat, die entsprechenden Ester der Methacrylsäure, Fumarsäurediethylester, Maleinsäurediethylester, Maleinsäuredimethylester, Maleisäuredibutylester, Vinylacetat und Vinylpropionat. Sofern die Monomere der Gruppe (c) zur Modifizierung der wasserlöslichen Poly(meth)acrylate verwendet werden, setzt man 0,5 bis 20, vorzugsweise 2 bis 10 Mol% bezogen auf die Monomere (a) ein.

Die wasserunlöslichen. Monomere können, falls sie bei der Copolymerisation mit eingesetzt werden, mit Hilfe von Emulgatoren in der wässrigen Lösung fein verteilt werden. Geeignete Emulgatoren sind beispielsweise ethoxylierte Nonylphenole, ethoxyliertes Ricinusöl, Alkylsulfate, Sorbitanfettsäureester, ethoxylierte Sorbite, ethoxylierte Sorbitanfettsäureester und Alkylsulfonate.

Solche Emulgatoren werden in einer Menge von 0 bis 3 Gew.-% bezogen auf die Monomere (a) eingesetzt.

Die Polymerisation kann gegebenenfalls in Gegenwart der üblichen Polymerisationsregler erfolgen. Geeignete Polymerisationsregler sind beispielsweise Thioverbindungen, wie Thioglykolsäure, Mercaptoalkohole, z.B. 2-Mercaptoethanol, Mercaptopropanol und Mercaptobutanol, Dodecylmercaptan, Ameisensäure, Ammoniak und Amine, z.B. Ethanolamin, Diethanolamin, Triethanolamin, Triethylamin, Morpholin und Piperidin.

Die Monomere (a), (b) und gegebenenfalls (c) werden in 20 bis 80, vorzugsweise 20 bis 50, insbesondere 30 bis 45gew.%iger wässriger Lösung in Gegenwart von Polymerisationsinitiatoren miteinander copolymerisiert. Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxid, Persulfate, Azoverbindungen und die sogenannten Redoxkatalysatoren. Bevorzugt ist der Einsatz von wasserlöslichen Katalysatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butylper-2-ethylhexanoat, tert.-Butylperisononanoat, tert.-Butylpermaleat, tert.-Butylperbenzoat, tert.-Butylper-3,5,5-tri-methylhexanoat und tert.-Amylperneodekanoat. Weitere geeignete Polymerisationsinitiatoren sind Azostarter, z.B. 2,2'-Azobis-(2-amidinopropan)dihydrochlorid, 2,2'-Azobis-(N,N-dimethylen)isobutyr-amidindihydrochlorid, 2-(Carbamoylazo)isobutyronitril und 4,4'-Azobis-(4-cyano-valeriansäure). Die genannten Polymerisationsinitiatoren werden in üblichen Mengen eingesetzt, z.B. in Mengen von 0,01 bis 5, vorzugsweise 0,1 bis 2 Mol%, bezogen auf die zu polymerisierenden Monomere.

Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetall-hydrogensulfit, -sulfit, -thiosulfat, -hyposulfit, -pyrosulfit oder -sulfid, Metallsalze, wie Eisen-II-ionen oder Silberionen oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man 1·10⁻⁵ bis1 Mol-% der reduzierenden Komponente des Redoxkatalysatorsystems und 1·10⁻⁵ bis 5 Mol-% der oxidierenden Komponente des Redoxkatalysators. Anstelle der oxidierenden Komponente des Redoxkatalysators oder zusätzlich kann man auch einen oder mehrere wasserlösliche Azostarter verwenden.

Bevorzugt wird im erfindungsgemäßen Verfahren ein Redoxsystem bestehend aus Wasserstoffperoxid, Natriumperoxodisulfat und Ascorbinsäure eingesetzt. In einer üblichen Ausführungsform werden diese Komponenten in den Konzentrationen 1·10⁻² Mol-% Wasserstoffperoxid, 0,084 Mol% Natriumperoxodisulfat und 2,5·10⁻³ Mol% Ascorbinsäure bezogen auf die Monomere eingesetzt.

Die wässrige Monomerlösung kann den Initiator gelöst oder dispergiert enthalten. Die Initiatoren können jedoch auch getrennt von der Monomerlösung dem Mischkneter zugeführt werden.

Die Monomerlösung wird vorzugsweise vor der Polymerisation von Restsauerstoff befreit. Dies geschieht mittels Inertgas, welches im Gleichstrom, Gegenstrom oder dazwischenliegenden Eintrittswinkeln eingeleitet werden kann. Eine gute Durchmischung kann beispielsweise mit Düsen, statischen oder dynamischen Mischern oder Blasensäulen erzielt werden.

Zusatzstoffe, die der Reaktion zugeführt werden, sind zum Beispiel wasserlösliche, monoethylenisch ungesättigte Monomere, weitere mindestens zwei polymerisierbare Gruppen enthaltende Monomere oder weitere wasserunlösliche monoethylenisch ungesättigte Monomere, wie sie bereits vorstehend beschrieben wurden. Weiterhin können die Zusatzstoffe organische oder anorganische Lösemittel sein. Besonders bevorzugt ist der mindestens eine Zusatzstoff das bereits vollständig vernetzte feinteilige Polymerisat als Granulat oder als Pulver, dieser pulverförmige Feststoff wird als Fines bezeichnet.

Die Dosierung des mindestens einen Zusatzstoffes erfolgt mittels einer Schnecke. Hierdurch ist eine feine Dosierung möglich. Zudem erlaubt die Schnecke bei vollständig gefülltem Schneckengang eine Abdichtung des Reaktors gegen die Umgebung. Diese Abdichtung ermöglicht einen Betrieb des Reaktors bei einem Druck, der vom Umgebungsdruck abweicht. Bevorzugt ist der Druck im Reaktor geringfügig niedriger als der Umgebungsdruck. Dieser geringe Unterdruck resultiert aus dem Abzug von Gasen aus dem Reaktor, die bei der Reaktion entstehen. Durch die Abdichtung wird vermieden, dass im Reaktor enthaltene Gase an die Umgebung abgegeben werden, was zu einer Abnahme des Druckes im Reaktor führt. Weiterhin wird durch die Abdichtung vermieden, dass Fremdstoffe aus der Umgebung in den Reaktor gelangen können. Insbesondere ist bei der Zudosierung des vernetzten feinteiligen Polymerisates ein Eindringen von Wasserdampf aus dem Reaktor in die Schnecke zu vermeiden, da das vernetzte feinteilige Polymerisat stark hygroskopisch ist, sich bei Wasseraufnahme stark ausdehnt und verklumpt und so zu einem Verstopfen der Schnecke führen kann.

Um Toträume zu vermeiden, in denen sich das vernetzte feinteilige Polymerisat ansammeln und anbacken kann, endet die Schnecke im Wesentlichen bündig mit der Innenwand des Reaktorinnenraumes.

Im Wesentlichen bündig heißt, dass keine Teile der Schnecke in den Bewegungsbereich der Knetwellen vorstehen und das Ende der Schnecke, d.h. die Schneckenspitze oder der letzte Gewindegang, wenn die Schnecke ohne Schneckenspitze ausgeführt ist, maximal 1 D außerhalb der Reaktorinnenwand endet.

Ein weiterer Vorteil der erfindungsgemäßen Lösung, bei der die Schnecke im Wesentlichen bündig mit der Innenwand des Reaktorraumes endet ist, dass der mindestens eine zugegebene Zusatzstoff direkt in den Reaktionsbereich zugegeben wird.

In einer bevorzugten Ausführungsform ist die Schnecke eine selbstabreinigende Doppelschnecke. Durch die Selbstabreinigung wird vermieden, dass Material aus dem Reaktor in die Schnecke gelangt und sich dort anlagert. Die Selbstabreinigung wird dadurch erreicht, dass die Doppelschnecke kämmend ist. Dabei sind sowohl leicht kämmende als auch tief kämmende Schnecken geeignet.

Die Doppelschnecke kann entweder gleichläufig oder gegenläufig ausgeführt sein. Bevorzugt ist die Doppelschnecke gleichläufig. Die Doppelschnecke kann in jedem beliebigen Gangverhältnis ausgeführt sein. Auch ist jede beliebige, durch den Fachmann realisierbare Gangtiefe und Steigung der Schnecke möglich. Vorzugsweise werden die Gangtiefe und die Steigung so gewählt, dass der mit der Schnecke in den Reaktor zudosierte Zusatzstoff nicht unkontrolliert aus der Schnecke ausläuft, sondern in gezielter Menge durch die Rotation der Schnecke zugeführt werden kann. Die gezielte Zugabe erfordert einen vollständig gefüllten Schneckengang im Bereich der Zugabeöffnung in den Reaktor.

In einer bevorzugten Ausführungsform beträgt das Verhältnis von Länge zu Durchmesser der Schnecke (L/D-Verhältnis) 10 bis 20, bevorzugt beträgt das L/D-Verhältnis 12 bis 17.

Die Länge der Schnecke zur Zufuhr des mindestens einen Zusatzstoffes wird vorzugsweise so gewählt, dass der Strom des Zusatzstoffes in den Reaktor auch bei nicht vollständiger Füllung der Schnecke vergleichmäßigt wird. Die Vergleichmäßigung erlaubt es, den Zusatzstoff kontinuierlich oder diskontinuierlich der Schnecke zuzuführen und unabhängig von der Beschickung der Vorrichtung zur Zugabe des mindestens einen Zusatzstoffes immer einen konstanten Strom des Zusatzstoffes dem Reaktor zuzuführen.

Um zu vermeiden, dass mit dem mindestens einen zugeführten Zusatzstoff Sauerstoff in den Reaktionsraum eingetragen wird, ist es in einer bevorzugten Ausführungsform möglich, die Vorrichtung mit einem Inertgas zu fluten. Als Inertgase können unabhängig voneinander Stickstoff, ein Edelgas wie Argon, Kohlenmonoxid, Kohlendioxid, Schwefelhexafluorid oder Mischungen dieser Gase verwendet werden. Bevorzugt wird Stickstoff als Inertgas eingesetzt. Die Zufuhr des Inertgases kann zum Beispiel über einen Zugabekanal erfolgen, über den die Vorrichtung auch mit dem Zusatzstoff beschickt wird. In einer weiteren Ausführungsform ist es möglich, das Inertgas direkt in den Schneckengang der Vorrichtung oder getriebeseitig über eine Dichtung, mit der die Schnecke zum Getriebe hin abgedichtet ist, zuzugeben.

Der Antrieb der Schnecke in der Vorrichtung zur Zugabe des mindestens einen Zusatzstoffes erfolgt vorzugsweise mit einem Elektromotor und einem stufenlos einstellbaren Getriebe. Durch das stufenlos einstellbare Getriebe lässt sich jede beliebige Drehzahl der Schnecke erzielen, wodurch die Menge des zudosierten Zusatzstoffes exakt einstellbar ist. Die Lagerung der Schnecke ist dabei vorzugsweise einseitig an der Seite, an der der Antrieb angebracht ist. Die Zentrierung der Schnecke erfolgt dabei im Allgemeinen über den Füllgrad. Damit sich die Schnecke zentriert ist aus diesem Grund eine Mindestfüllung erforderlich. Diese beträgt im Allgemeinen eine bis zwei Gangwicklungen.

Der Reaktor, in dem das feinteilige, vernetzte Polymerisat hergestellt wird, ist vorzugsweise ein Knetreaktor. Geeignete Knetreaktoren umfassen im Allgemeinen zwei parallel nebeneinander angeordnete Wellen. Auf den Oberflächen der Wellen sind im Allgemeinen Knetbarren auf Stegen angeordnet. Diese sind von einem Gehäuse umschlossen, in dem mindestens eine Öffnung oberhalb der Wellen und mindestens eine Öffnung zur Produktabfuhr ausgebildet sind; wobei die Wellen an beiden Enden mindestens einfach drehbar gelagert und mindestens an einem Ende angetrieben sind.

Bei einem Knetreaktor mit zwei Wellen wird eine Welle als Hauptwelle und die zweite Welle als Putzwelle bezeichnet. Es sind sowohl auf der Hauptwelle als auch auf der Putzwelle Knetbarren angeordnet, die jede beliebige geeignete Form aufweisen können. Die Anzahl der über den Umfang verteilten Knetbarren auf der Hauptwelle kann sich dabei von der auf der Putzwelle unterscheiden. Bei einer unterschiedlichen Anzahl an Knetbarren auf Haupt- und Putzwelle werden diese mit unterschiedlichen Drehzahlen angetrieben. Als Putzwelle wird dabei diejenige Welle bezeichnet, die über den Umfang verteilt weniger Knetbarren aufweist und schneller rotiert. Das Drehzahlverhältnis ist dabei vom Verhältnis der Anzahl der Knetbarren - wie z.B. in EP-A 0 517 068 beschrieben - abhängig. Die Wellen können entweder gleich- oder gegensinnig angetrieben werden.

Die Vorrichtung zur Zugabe von Zusatzstoffen kann von einer beliebigen Richtung in den Reaktor fördern, zum Beispiel seitlich in einem beliebigen Winkel zur Senkrechten auf die Putzwelle oder auf die Hauptwelle. Bevorzugt liegt der Winkel, in dem die mindestens eine Schnecke den mindestens einen Zusatzstoff in den Reaktor fördert in einem Winkel im Bereich von 0 bis 90°. Besonders bevorzugt ist die Vorrichtung zur Zugabe des mindestens einen Zusatzstoffes so am Reaktor angeordnet, dass die mindestens eine Schnecke den mindestens einen Zusatzstoff senkrecht von oben in den Reaktor fördert. Dies hat insbesondere bei einem nur teilgefüllten Reaktor den Vorteil, dass der Zusatzstoff in eine Freizone im Reaktor zugeführt wird. Als Freizone wird dabei der Bereich im Reaktor verstanden, der nicht mit dem Reaktionsprodukt gefüllt ist. Bei einem Knetreaktor ist die Freizone die Zone im Reaktor, in der aufgrund der Rotation der Wellen des Knetreaktors eine Wirbelschicht entsteht. Durch das Eindosieren in die Wirbelschicht erfolgt sofort eine gute Vermischung des Zusatzstoffes mit den Stoffen, die bereits im Reaktor enthalten sind.

Besonders bevorzugt erfolgt die Zufuhr des mindestens einen Zusatzstoffes in einem Bereich maximaler Durchmischung. Hierdurch wird bereits nach kurzer Zeit eine homogene Durchmischung des Reaktorinhaltes mit dem Zusatzstoff erreicht.

Bei Verwendung eines Knetreaktors mit zwei Wellen ist die Schnecke zur Förderung des mindestens einen Zusatzstoffes senkrecht zwischen den Wellenachsen des Knetreaktors angeordnet. Die Zufuhr des Zusatzstoffes erfolgt dadurch direkt in dem Bereich, in dem die Knetbarren der Wellen ineinander greifen, so dass eine gute Durchmischung des Reaktorinhaltes mit dem mindestens einen Zusatzstoff erreicht wird.

In einer bevorzugten Ausführungsform ist die Vorrichtung zur Zufuhr des mindestens einen Zusatzstoffes im zweiten oder dritten Viertel des Reaktors, bezogen auf die Reaktorlänge in Richtung parallel zu den Wellenachsen angeordnet.

Bei Knetreaktoren ist in einer bevorzugten Ausführungsform mindestens eine Öffnung oberhalb der Wellen als Dom im Gehäuse ausgebildet. Bei den aus dem Stand der Technik bekannten Knetreaktoren kann sich Produkt im Dom ansammeln und anbacken. Diese Anbackungen führen, sobald sie aus dem Dom wieder in den Knetreaktor zurückgelangen, zu einer erhöhten Scherbeanspruchung der Knetbarren und der Wellen. Um die Anbackungen bzw. Ablagerungen zu vermeiden, kann die mindestens eine Öffnung oberhalb der Wellen durch einen Verdränger verschlossen werden, dessen den Wellen zugewandte Seite so ausgebildet ist, dass zwischen dem Verdränger und den Knetbarren der Wellen ein Spalt ausgebildet ist, dessen Spaltweite vorzugsweise maximal der durchgängigen Spaltweite zwischen Knetbarren und Gehäuse entspricht. Der Verdränger ist vorzugsweise so ausgebildet, dass er durch eine Schiebepassung passgenau von der Öffnung oberhalb der Wellen aufgenommen wird, so dass die Entstehung von Totzonen zwischen der Öffnung oberhalb der Wellen und dem Verdränger vermieden wird.

Die Vorrichtung zur Zugabe des mindestens einen Zusatzstoffes ist in einer bevorzugten Ausführungsform im Verdränger, mit dem der Dom oberhalb der Wellen in der Reaktorwand verschlossen ist, aufgenommen. Hierdurch wird ermöglicht, dass die Vorrichtung zur Zugabe zum Beispiel zum Reinigen auf einfache Weise durch Entnahme des Verdrängers aus dem Reaktor entfernt werden kann. Auch kann die Öffnung in der Reaktorwand durch einen Verdränger ohne Vorrichtung zur Zufuhr des mindestens einen Zusatzstoffes verschlossen werden, wenn keine Zugabe von Zusatzstoffen erforderlich ist.

In einer bevorzugten Ausführungsform wird die Vorrichtung zur Zugabe des mindestens einen Zusatzstoffes über einen seitlichen Zugabekanal mit dem mindestens einen Zusatzstoff beschickt. Der seitliche Zugabekanal ist dabei vorzugsweise in einem Winkel von 10° bis 50°, besonders bevorzugt in einem Winkel von 20° bis 40° und insbesondere in einem Winkel von 25° bis 35° zur Schnecke geneigt angeordnet. Durch die Neigung des Zugabekanals wird sichergestellt, dass der zugegebene Zusatzstoff in die Vorrichtung gelangt und nicht im Zugabekanal hängen bleibt und diesen verstopft. Die Beschickung der Vorrichtung zur Zugabe des mindestens einen Zusatzstoffes erfolgt vorzugsweise mit einer Dosiereinrichtung. Als Dosiereinrichtung eignet sich zum Beispiel ein Zellenrad, eine Dosierklappe oder jede andere, dem Fachmann bekannte Dosiereinrichtung.

Die Schnecke kann als Hohlschnecke oder als Vollschnecke ausgebildet sein. Vorteil einer Hohlschnecke ist deren im Vergleich zur Vollschnecke geringeres Gewicht und die Möglichkeit die Schnecke von innen zu temperieren, Vorteil einer Vollschnecke ist deren größere Stabilität, insbesondere die größere Bruchfestigkeit.

Weiterhin kann die Schnecke einteilig ausgeführt oder aus mehreren Elementen aufgebaut sein. Bevorzugt ist die Schnecke einteilig ausgeführt. Als Werkstoffe für die Schnecke eignen sich alle hochlegierten austenitischen Stähle, ferritischaustenitischen Duplexwerkstoffe, Nickelbasislegierungen und Titan. Bei der Auswahl des geeigneten Werkstoffes ist darauf zu achten, dass der Werkstoff gegen die bei der Poly(meth)acrylatherstellung auftretenden pH-Werte im Bereich von 3 bis 10, vorzugsweise 5 bis 7 stabil ist. Bevorzugt als Werkstoff für die Schnecke sind hochlegierte austenitische Stähle, besonders bevorzugt St 1.4112.

Damit bei einem Brechen der Schnecke der Reaktor nicht beschädigt wird, ist die Vorrichtung zur Zufuhr des mindestens einen Zusatzstoffes vorzugsweise mit einer Bruchsicherung versehen. In einer ersten Ausführungsform ist als Bruchsicherung zwischen der Schnecke und dem Reaktor ein Bolzen angeordnet ist, gegen den die Schnecke im Fall des Brechens fällt. In einer zweiten Ausführungsform ist als Bruchsicherung im Inneren der Schnecke ein Bolzen aufgenommen, über den mit dem Gewicht der Schnecke eine Feder so vorgespannt wird, dass bei einem Abbrechen eines Teils der Schnecke der Bolzen aufgrund des geringeren Gewichts der Schnecke durch die Federkraft der vorgespannten Feder gegen einen Sensor schlägt, über den der Reaktor angehalten wird.

Neben der Zugabe eines einzelnen Zusatzstoffes ist es auch möglich, dem Reaktor gleichzeitig mit einer Vorrichtung mehrere Zusatzstoffe zuzuführen. Dabei wird vorzugsweise jeder Zusatzstoff über einen separaten Zugabekanal zugeführt. Die Zusatzstoffe können dabei den gleichen oder unterschiedliche Aggregatzustände aufweisen. Wenn die Zusatzstoffe unterschiedliche Aggregatzustände haben, zum Beispiel ein flüssiger und ein fester Zusatzstoff, ist der Zugabekanal, über den die Vorrichtung mit dem festen Zusatzstoff beschickt wird, vorzugsweise oberhalb des Zugabekanals angeordnet ist, über den die Vorrichtung mit dem mindestens einen flüssigen Zusatzstoff beschickt wird.

Die Schnecke in der Vorrichtung zur Zugabe des mindestens einen Zusatzstoffes ist vorzugsweise so ausgelegt, dass diese kontinuierlich fördert. Es ist jedoch auch ein diskontinuierlicher Betrieb möglich. Bevorzugt wird die Schnecke auch bei diskontinuierlicher Förderung des mindestens einen Zusatzstoffes kontinuierlich betrieben. Um eine diskontinuierliche Förderung des mindestens einen Zusatzstoffes zu erzielen wird dieser diskontinuierlich über die Dosiereinrichtung zugeführt.

Neben der Zugabe von mehreren Zusatzstoffen über eine Vorrichtung zur Zugabe ist es auch möglich, für jeden Zusatzstoff eine separate Vorrichtung vorzusehen. Die einzelnen Vorrichtungen sind bei Verwendung eines Knetreaktors vorzugsweise in Achsrichtung der Wellen hintereinander angeordnet.

Im Folgenden wird die Erfindung anhand einer Zeichnung näher beschrieben. Darin zeigt:
- Fig. 1: einen Schnitt durch eine erfindungsgemäße Vorrichtung zur Zufuhr von Zusatzstoffen,
- Fig. 2: eine Bruchsicherung mit Bolzen und Feder.

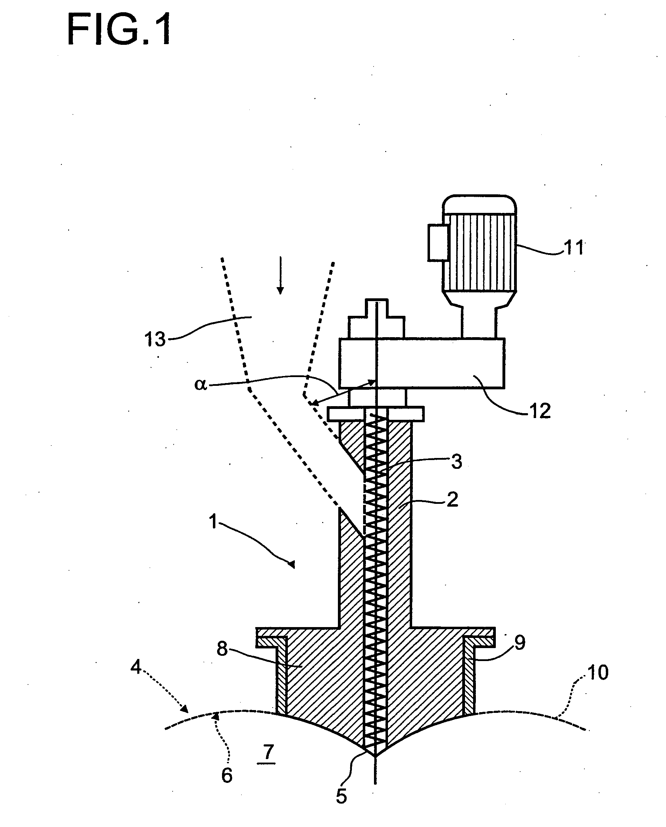

Figur 1 zeigt einen Schnitt durch eine erfindungsgemäße Vorrichtung zur Zufuhr von Zusatzstoffen.

Eine Vorrichtung 1 zur Zufuhr von Zusatzstoffen umfasst ein Gehäuse 2, in dem eine Schnecke 3 aufgenommen ist. Die Vorrichtung 1 ist auf einem Knetreaktor 4, der hier gestrichelt dargestellt ist, aufgenommen. Der Knetreaktor umfasst zwei hier nicht dargestellt Wellen, die parallel zueinander angeordnet sind. Die Schnecke 3 mündet in einer Zugabeöffnung 5 und endet dort im Wesentlichen bündig mit einer Innenwand 6 des Reaktorinnenraumes 7. Um zu vermeiden, dass bei einer Beschädigung der Schnecke Teile in den Reaktorinnenraum gelangen, ist es möglich, im Bereich der Zugabeöffnung 5 einen hier nicht dargestellten Bolzen vorzusehen, der derart im Gehäuse 2 aufgenommen ist, dass die Teile der Schnecke, die ausgebrochen sind, auf diesem liegen bleiben, um eine Beschädigung des Knetreaktors 4 zu vermeiden.

Das Gehäuse 2 ist in Form eines Verdrängers 8 ausgeführt, der einen Dom 9 auf dem Reaktorgehäuse 10 verschließt. Der Verdränger 8 ist dabei so ausgebildet, dass die dem Knetreaktor 4 zugewandte Seite den Knetreaktor 4 so verschließt, dass zwischen der Reaktorinnenwand 6 und den Wellen des Knetreaktors 4 beziehungsweise zwischen dem Verdränger 8 und den Wellen des Knetreaktors 4 ein konstanter Spalt ausgebildet ist.

Der Antrieb der Schnecke 3 erfolgt mit einem Elektromotor 11. Dieser ist seitlich neben der Schneckenachse angeordnet. Über ein Getriebe 12 ist der Elektromotor 11 mit der Schnecke 3 verbunden. Das Getriebe 12 ist vorzugsweise stufenlos, um die Schneckengeschwindigkeit beliebig regeln zu können.

Die Zugabe des Zusatzstoffes erfolgt über einen Zugabekanal 13. Der Zugabekanal 13 ist zur Schneckenachse in einem Winkel α geneigt. Der Winkel α liegt dabei vorzugsweise in einem Bereich zwischen 10° und 50°. Hierdurch wird gewährleistet, dass sich der Zusatzstoff, der über den Zugabekanal 13 zugeführt wird, aufgrund der Schwerkraft in den Schneckengang der Vorrichtung 1 bewegt. Die Zudosierung des Zusatzstoffes in den Zugabekanal erfolgt vorzugsweise über eine Dosiereinrichtung.

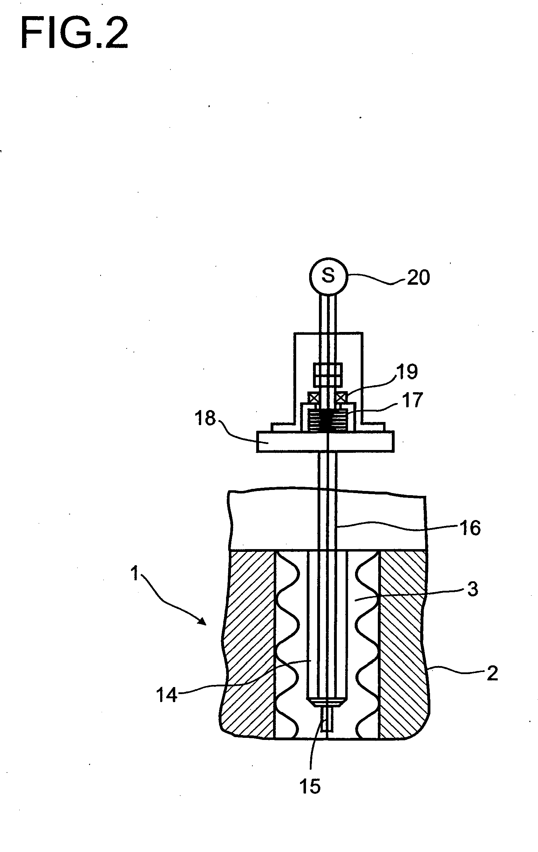

In Figur 2 ist schematisch eine Bruchsicherung mit einem Bolzen und einer Feder dargestellt. Die Bruchsicherung wirkt über die Schwerkraft und die Masse der Schnecke 3. In der Schnecke 3 ist eine Bohrung 14 ausgeführt. Die Bohrung 14 endet in einem Gewinde 15. In das Gewinde 15 ist ein Bolzen 16 eingeschraubt. Mit der dem Gewinde 15 entgegen gesetzten Seite wirkt der Bolzen 16 auf ein als Druckfeder ausgebildetes Federelement 17. Das Federelement 17 umschließt den Bolzen und stützt sich mit einer Seite an einer fest am Gehäuse 2 montierten Platte 18 und mit der anderen Seite an einem am Bolzen 16 befestigten Ring 19 ab. Die Schnecke 3 wird durch die Schwerkraft nach unten gezogen, wodurch der Ring 19 auf das Federelement 17 wirkt und dieses vorspannt. Wenn nun ein Teil der Schnecke abbricht verringert sich die Masse der Schnecke, es wirkt eine geringer Kraft auf das Federelement 17 und der Bolzen 16 bewegt sich mitsamt der daran befestigten Schnecke in Richtung eines Sensors 20. Durch den veränderten Druck, der auf den Sensor 20 wirkt, wird festgestellt, dass ein Teil der Schnecke abgebrochen ist. Der Knetreaktor kann angehalten werden und ein weiterer Schaden wird vermieden.

### Bezugszeichenliste

- 1: Vorrichtung zur Zufuhr mindestens eines Zusatzstoffes
- 2: Gehäuse
- 3: Schnecke
- 4: Knetreaktor
- 5: Zugabeöffnung
- 6: Innenwand
- 7: Reaktorinnenraum
- 8: Verdränger
- 9: Dom
- 10: Reaktorgehäuse
- 11: Elektromotor
- 12: Getriebe
- 13: Zugabekanal
- 14: Bohrung
- 15: Gewinde
- 16: Bolzen
- 17: Federelement
- 18: Platte
- 19: Ring
- 20: Sensor

## Patentansprüche

1. Verwendung einer Vorrichtung zur Zugabe mindestens eines festen, viskos-flüssigen oder in Lösemittel dispergierten Zusatzstoffes in einen Reaktorinnenraum eines Reaktors zur Herstellung von vernetzten, feinteiligen Polymerisaten durch Copolymerisieren von
(a) wasserlöslichen, monoethylenisch ungesättigten Monomeren und
(b) 0,001 bis 5 Mol-%, bezogen auf die Monomere (a), mindestens zwei polymerisierbare Gruppen enthaltenden Monomeren,
(c) 0 bis 20 Mol% bezogen auf die Monomere (a) wasserunlöslichen monoethylenisch ungesättigten Monomeren,
wobei die Vorrichtung mindestens eine Schnecke zur Förderung des mindestens einen Zusatzstoffes umfasst und die mindestens eine Schnecke in einer Zugabeöffnung im Wesentlichen bündig mit der Innenwand des Reaktorinnenraumes endet.

2. Verwendung nach Anspruch 1, **dadurch gekennzeichnet, dass** die mindestens eine Schnecke eine selbstabreinigende Doppelschnecke ist.

3. Verwendung nach Anspruch 2, **dadurch gekennzeichnet, dass** die Doppelschnecke gleichläufig ist.

4. Verwendung nach eine der Ansprüche 1 bis 3, **dadurch gekennzeichnet, dass** die mindestens eine Schnecke den mindestens einen Zusatzstoff senkrecht von oben in den Reaktor fördert.

5. Verwendung nach einem der Ansprüche 1 bis 4, **dadurch gekennzeichnet, dass** der Reaktor ein Knetreaktor ist.

6. Verwendung nach Anspruch 5, **dadurch gekennzeichnet, dass** der Knetreaktor zwei parallel nebeneinander angeordnete Wellen umfasst.

7. Verwendung nach einem der Ansprüche 1 bis 6, **dadurch gekennzeichnet, dass** die Zufuhr des mindestens einen Zusatzstoffes in einen Bereich maximaler Durchmischung erfolgt.

8. Verwendung nach Anspruch 7, **dadurch gekennzeichnet, dass** die Schnecke zur Förderung des mindestens einen Zusatzstoffes senkrecht zwischen den Wellenachsen des Knetreaktors angeordnet ist.

9. Verwendung nach einem der Ansprüche 5 bis 8, **dadurch gekennzeichnet, dass** der mindestens eine Zusatzstoff in eine Freizone im Reaktor zugeführt wird.

10. Verwendung nach Anspruch 5 oder 6, **dadurch gekennzeichnet, dass** die Vorrichtung zur Zufuhr des mindestens einen Zusatzstoffes im zweiten oder dritten Viertel des Reaktors, bezogen auf die Reaktorlänge in Richtung parallel zu den Wellenachsen angeordnet ist.

11. Verwendung nach einem der Ansprüche 5 bis 10, **dadurch gekennzeichnet, dass** die Vorrichtung zur Zufuhr des mindestens einen Zusatzstoffes in einem Verdränger, der einen Dom in der Reaktorwand verschließt, aufgenommen ist.

12. Verwendung nach einem der Ansprüche 1 bis 11, **dadurch gekennzeichnet, dass** die Vorrichtung zur Zugabe des mindestens einen Zusatzstoffes über einen seitlichen Zugabekanal mit dem mindestens einen Zusatzstoff beschickt wird.

13. Verwendung nach Anspruch 12, **dadurch gekennzeichnet, dass** der seitliche Zugabekanal in einem Winkel von 10° bis 50° zur Schnecke geneigt angeordnet ist.

14. Verwendung nach Anspruch 12 oder 13, **dadurch gekennzeichnet, dass** die Beschickung der Vorrichtung zur Zugabe des mindestens einen Zusatzstoffes mit einer Dosiereinrichtung erfolgt.

15. Verwendung nach einem der Ansprüche 1 bis 14, **dadurch gekennzeichnet, dass** zwischen der Schnecke und dem Reaktor ein Bolzen angeordnet ist, gegen den die Schnecke im Fall des Brechens fällt.

16. Verwendung nach einem der Ansprüche 1 bis 14, **dadurch gekennzeichnet, dass** im Inneren der Schnecke ein Bolzen aufgenommen ist, über den mit dem Gewicht der Schnecke eine Feder so vorgespannt wird, dass bei einem Abbrechen eines Teils der Schnecke der Bolzen aufgrund des geringeren Gewichts der Schnecke durch die Federkraft der vorgespannten Feder gegen einen Sensor schlägt, über den der Reaktor angehalten wird.

17. Verwendung nach einem der Ansprüche 1 bis 16, **dadurch gekennzeichnet, dass** die Länge der Schnecke zur Zufuhr des mindestens einen Zusatzstoffes so gewählt ist, dass der Strom des Zusatzstoffes in den Reaktor auch bei nicht vollständiger Füllung der Schnecke vergleichmäßigt wird.

18. Verwendung nach einem der Ansprüche 1 bis 17, **dadurch gekennzeichnet, dass** die Schnecke mit dem darin enthaltenen mindestens einen Zusatzstoff den Reaktor gegen die Umgebung abdichtet.

19. Verwendung nach einem der Ansprüche 1 bis 18, **dadurch gekennzeichnet, dass** die Schnecke mit einem Inertgas gespült wird.

20. Verwendung nach einem der Ansprüche 1 bis 19, **dadurch gekennzeichnet, dass** über die Vorrichtung zur Zugabe von mindestens einem Zusatzstoff gleichzeitig mindestens ein fester und ein flüssiger Zusatzstoff zugegeben werden.

21. Verwendung nach Anspruch 20, **dadurch gekennzeichnet, dass** die Vorrichtung mit dem mindestens einen festen Zusatzstoff über einen Zugabekanal beschickt wird, der oberhalb des Zugabekanals angeordnet ist, über den die Vorrichtung mit dem mindestens einen flüssigen Zusatzstoff beschickt wird.

22. Verwendung nach einem der Ansprüche 1 bis 19, **dadurch gekennzeichnet, dass** der mindestens ein Zusatzstoff ein Granulat oder ein Pulver ist.

23. Verwendung nach einem der Ansprüche 1 bis 22, **dadurch gekennzeichnet, dass** auch bei diskontinuierlicher Förderung des mindestens einen Zusatzstoffes die Schnecke kontinuierlich betrieben wird.

## Claims

1. The use of an apparatus for adding at least one solid or viscous liquid additive, or an additive dispersed in solvent, to a reactor interior of a reactor for preparing crosslinked, finely divided polymers by copolymerizing
(a) water-soluble, monoethylenically unsaturated monomers and
(b) from 0.001 to 5 mol%, based on the monomers (a), of monomers comprising at least two polymerizable groups,
(c) from 0 to 20 mol%, based on the monomers (a), of water-insoluble monoethylenically unsaturated monomers,
where the apparatus comprises at least one screw for conveying the at least one additive and the at least one screw ends in an addition orifice substantially flush with the inner wall of the reactor interior.

2. The use according to claim 1, wherein the at least one screw is a self-cleaning double screw.

3. The use according to claim 2, wherein the double screw is corotating.

4. The use according to any of claims 1 to 3, wherein the at least one screw conveys the at least one additive into the reactor vertically from the top.

5. The use according to any of claims 1 to 4, wherein the reactor is a kneading reactor.

6. The use according to claim 5, wherein the kneading reactor comprises two shafts arranged in parallel alongside one another.

7. The use according to any of claims 1 to 6, wherein the at least one additive is fed into a region of maximum mixing.

8. The use according to claim 7, wherein the screw for conveying the at least one additive is arranged vertically between the shaft axes of the kneading reactor.

9. The use according to any of claims 5 to 8, wherein the at least one additive is fed into a free zone in the reactor.

10. The use according to claim 5 or 6, wherein the apparatus for feeding the at least one additive is arranged in the second or third quarter of the reactor based on the reactor length in the direction parallel to the shaft axes.

11. The use according to any of claims 5 to 10, wherein the apparatus for feeding the at least one additive is accommodated in a displacer which closes a dome in the reactor wall.

12. The use according to any of claims 1 to 11, wherein the apparatus for adding the at least one additive is charged with the at least one additive via a lateral addition channel.

13. The use according to claim 12, wherein the lateral addition channel is arranged inclined at an angle of from 10° to 50° to the screw.

14. The use according to claim 12 or 13, wherein the apparatus for adding the at least one additive is charged with a metering unit.

15. The use according to any of claims 1 to 14, wherein between the screw and the reactor is arranged a pin against which the screw falls in the event of fracture.

16. The use according to any of claims 1 to 14, wherein the interior of the screw accommodates a pin, by means of which a spring is prestressed with the weight of the screw in such a way that, in the event of part of the screw breaking off, the pin, owing to the low weight of the screw, as a result of the spring force of the prestressed spring, impacts against a sensor by means of which the reactor is stopped.

17. The use according to any of claims 1 to 16, wherein the length of the screw for feeding the at least one additive is selected such that the flow of the additive into the reactor is made uniform even when the screw is not filled fully.

18. The use according to any of claims 1 to 17, wherein the screw with the at least one additive present therein seals the reactor from the environment.

19. The use according to any of claims 1 to 18, wherein the screw is flushed with an inert gas.

20. The use according to any of claims 1 to 19, wherein the apparatus for adding at least one additive simultaneously adds at least one solid and one liquid additive.

21. The use according to claim 20, wherein the apparatus is charged with the at least one solid additive via an addition channel which is arranged above the addition channel via which the apparatus is charged with the at least one liquid additive.

22. The use according to any of claims 1 to 19, wherein the at least one additive is a granule or a powder.

23. The use according to any of claims 1 to 22, wherein the screw is operated continuously even when the at least one additive is conveyed discontinuously.

## Revendications

1. Utilisation d'un dispositif pour l'ajout d'au moins un additif solide, liquide visqueux ou dispersé dans un solvant dans une chambre intérieure de réacteur d'un réacteur pour la fabrication de polymères réticulés finement divisés par copolymérisation de
(a) des monomères monoéthyléniquement insaturés solubles dans l'eau et
(b) 0,001 à 5 % en moles, par rapport aux monomères (a), de monomères contenant au moins deux groupes polymérisables,
(c) 0 à 20 % en moles, par rapport aux monomères (a), de monomères monoéthyléniquement insaturés insolubles dans l'eau,
le dispositif comprenant au moins une vis sans fin pour le transport du ou des additifs et la ou les vis sans fin finissant dans une ouverture d'alimentation de manière essentiellement alignée avec la paroi intérieure de la chambre intérieure de réacteur.

2. Utilisation selon la revendication 1, **caractérisée en ce que** la ou les vis sans fin sont une vis sans fin double autonettoyante.

3. Utilisation selon la revendication 2, **caractérisée en ce que** la vis sans fin double est co-rotative.

4. Utilisation selon l'une quelconque des revendications 1 à 3, **caractérisée en ce que** la ou les vis sans fin transportent le ou les additifs dans le réacteur à la verticale depuis le haut.

5. Utilisation selon l'une quelconque des revendications 1 à 4, **caractérisée en ce que** le réacteur est un réacteur à malaxage.

6. Utilisation selon la revendication 5, **caractérisée en ce que** le réacteur à malaxage comprend deux arbres placés parallèlement l'un à côté de l'autre.

7. Utilisation selon l'une quelconque des revendications 1 à 6, **caractérisée en ce que** l'introduction du ou des additifs a lieu dans une zone de mélange maximal.

8. Utilisation selon la revendication 7, **caractérisée en ce que** la vis sans fin pour le transport du ou des additifs est placée à la verticale entre les axes des arbres du réacteur à malaxage.

9. Utilisation selon l'une quelconque des revendications 5 à 8, **caractérisée en ce que** le ou les additifs sont introduits dans une zone libre du réacteur.

10. Utilisation selon la revendication 5 ou 6, **caractérisée en ce que** le dispositif pour l'introduction du ou des additifs est placé dans le deuxième ou troisième quart du réacteur, par rapport à la longueur du réacteur dans la direction parallèle aux axes des arbres.

11. Utilisation selon l'une quelconque des revendications 5 à 10, **caractérisée en ce que** le dispositif pour l'introduction du ou des additifs est contenu dans un piston qui ferme un dôme dans la paroi du réacteur.

12. Utilisation selon l'une quelconque des revendications 1 à 11, **caractérisée en ce que** le dispositif pour l'ajout du ou des additifs est alimenté avec le ou les additifs par un canal d'alimentation latéral.

13. Utilisation selon la revendication 12, **caractérisée en ce que** le canal d'alimentation latéral est placé penché à un angle de 10° à 50° par rapport à la vis sans fin.

14. Utilisation selon la revendication 12 ou 13, **caractérisée en ce que** l'alimentation du dispositif pour l'ajout du ou des additifs a lieu avec un dispositif de dosage.

15. Utilisation selon l'une quelconque des revendications 1 à 14, **caractérisée en ce qu'**un boulon est placé entre la vis sans fin et le réacteur, contre lequel la vis sans fin tombe en cas de rupture.

16. Utilisation selon l'une quelconque des revendications 1 à 14, **caractérisée en ce qu'**un boulon est contenu à l'intérieur de la vis sans fin, par le biais duquel un ressort est prétendu avec le poids de la vis sans fin de manière à ce que, lors d'une rupture d'une partie de la vis sans fin, le boulon heurte un capteur en raison du poids plus faible de la vis sans fin par la force de ressort du ressort prétendu, par le biais duquel le réacteur est arrêté.

17. Utilisation selon l'une quelconque des revendications 1 à 16, **caractérisée en ce que** la longueur de la vis sans fin pour l'introduction du ou des additifs est choisie de manière à ce que l'écoulement de l'additif dans le réacteur soit homogénéisé même lors d'un remplissage incomplet de la vis sans fin.

18. Utilisation selon l'une quelconque des revendications 1 à 17, **caractérisée en ce que** la vis sans fin contenant le ou les additifs étanchéifie le réacteur contre l'environnement.

19. Utilisation selon l'une quelconque des revendications 1 à 18, **caractérisée en ce que** la vis sans fin est rincée avec un gaz inerte.

20. Utilisation selon l'une quelconque des revendications 1 à 19, **caractérisée en ce qu'**au moins un additif solide et un additif liquide sont introduits simultanément par le dispositif d'ajout d'au moins un additif.

21. Utilisation selon la revendication 20, **caractérisée en ce que** le dispositif est alimenté avec le ou les additifs solides par un canal d'alimentation, qui est placé au-dessus du canal d'alimentation par lequel le dispositif est alimenté avec le ou les additifs liquides.

22. Utilisation selon l'une quelconque des revendications 1 à 19, **caractérisée en ce que** le ou les additifs sont un granulat ou une poudre.

23. Utilisation selon l'une quelconque des revendications 1 à 22, **caractérisée en ce que** la vis sans fin est exploitée en continu, même lors d'un transport discontinu du ou des additifs.
